# EUROPEAN PATENT APPLICATION

(11) **EP 4 776 636 A1**
(43) Date of publication of application: **15.07.2026**
(21) Application number: 24861971.0
(22) Date of filing: 03.09.2024
(51) Int. Cl.: H04N 21/4784

(54) **METHOD AND APPARATUS FOR DETERMINING INTERACTIVE RESOURCES, AND DEVICE AND STORAGE MEDIUM**

(30) Priority: 04.09.2023 CN 202311132991
(71) Applicant: Beijing Zitiao Network Technology Co., Ltd., Beijing 100190 (CN)
(72) Inventor: YANG, Jun, Beijing 100028 (CN); YU, Yating, Beijing 100028 (CN); DUAN, Honglin, Beijing 100028 (CN)
(74) Representative: Grünecker Patent- und Rechtsanwälte PartG mbB
(86) International application number: PCT/CN2024/116683
(87) International publication number: WO 2025/051128

(57) **Abstract**

Embodiment of the disclosure relates to a method, apparatus, device and storage medium for determining an interactive resource. The method propsed herein includes: presenting, to a first user of a live stream, a management interface for managing an interactive resource for the live stream (710); obtaining at least one resource editing operation of the first user in the management interface (720), wherein the at least one resource editing operation indicates at least: adding at least one interactive resource, removing at least one interactive resource, or adjusting a presentation order of an interactive resource; and determining, based on the at least one resource editing operation, a set of target interactive resources for the live stream (730). Based on the above manner, the embodiments of the disclosure can support a specific user (for example, a streamer) of a live stream to manage available interactive resources in a live stream.

## Description

This application claims the benefit of Chinese Patent Application No. 202311132991.4, filed on September 04, 2023, entitled "METHOD, APPARATUS, DEVICE AND STORAGE MEDIUM FOR DETERMINING AN INTERACTIVE RESOURCE," the entire content of which is incorporated herein by reference.

### FIELD

Example embodiments of the present disclosure generally relate to the field of computers, and in particular, to a method, apparatus, device and computer-readable storage medium for determining an interactive resource.

### BACKGROUND

With the development of computer technologies, the Internet has become the primary channel for users to obtain various types of content. With the rapid development of the live streaming technology for content propagation by using the Internet and the streaming media technology, people may perform various types of interactions through live streams.

### SUMMARY

In a first aspect of the present disclosure, a method for determining an interactive resource is provided. The method includes: presenting, to a first user of a live stream, a management interface for managing an interactive resource for the live stream; obtaining at least one resource editing operation of the first user in the management interface, where the at least one resource editing operation indicates at least: adding at least one interactive resource, removing at least one interactive resource, or adjusting a presentation order of an interactive resource; and determining, based on the at least one resource editing operation, a set of target interactive resources for the live stream.

In a second aspect of the present disclosure, a method of live stream interaction is provided. The method includes: presenting a live streaming interface of the live stream to a second user of the live stream; displaying an interactive interface in the live streaming interface, where the interactive interface displays a set of target interactive resources for the live stream; and presenting, in the live streaming interface, an interaction effect corresponding to a third interactive resource in response to receiving a selection of the third interactive resource of the set of target interactive resources, where the display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource.

In a third aspect of the present disclosure, an apparatus for determining an interactive resource is provided. The apparatus includes a first presenting module configured to present, to a first user of a live stream, a management interface for managing an interactive resource for the live stream; an operation obtaining module configured to obtain at least one resource editing operation of the first user in the management interface, where the at least one resource editing operation indicates at least: adding at least one interactive resource, removing at least one interactive resource, or adjusting a presentation order of an interactive resource; and a resource determining module configured to determine, based on the at least one resource editing operation, a set of target interactive resources for the live stream.

In a fourth aspect of the present disclosure, an apparatus for live stream interaction is provided. The apparatus includes a second presenting module configured to present a live streaming interface of the live stream to a second user of the live stream; a resource display module configured to display an interactive interface in the live streaming interface, where the interactive interface displays a set of target interactive resources for the live stream; and a resource interacting module configured to present, in the live streaming interface, an interaction effect corresponding to a third interactive resource in response to receiving a selection of the third interactive resource of the set of target interactive resources, where the display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource..

In a fifth aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the electronic device to perform the method of the first aspect and/or the second aspect.

In a sixth aspect of the present disclosure, a computer-readable storage medium is provided. The computer-readable storage medium has a computer program stored thereon, the computer program being executable by a processor to implement the method of the first aspect and/or the second aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments according to the present disclosure may be implemented;
FIGS. 2A-2C illustrate example interfaces according to some embodiments of the present disclosure;
FIGS. 3A-3D illustrate example interfaces according to some embodiments of the present disclosure;
FIGS. 4A and 4B illustrate example interfaces according to some embodiments of the present disclosure;
FIGS. 5A and 5B illustrate example interfaces according to some embodiments of the present disclosure;
FIGS. 6A-6C illustrate example interfaces according to some embodiments of the present disclosure;
FIG. 7A illustrates a flowchart of an example process of determining an interactive resource according to some embodiments of the present disclosure;
FIG. 7B illustrates a flowchart of an example process of live stream interaction according to some embodiments of the present disclosure;
FIG. 8A illustrates a schematic structural block diagram of an apparatus for determining an interactive resource according to some embodiments of the present disclosure;
FIG. 8B illustrates a schematic structural block diagram of an apparatus for live stream interaction according to some embodiments of the present disclosure; and
FIG. 9 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein. Rather, these embodiments are provided for a more thorough and complete understanding of the present disclosure. It should be understood that the drawings and embodiments of the present disclosure are for example purposes only and are not intended to limit the scope of the present disclosure.

It should be noted that the title of any section/subsection provided herein is not limiting. Various embodiments are described throughout, and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the term "including" and the like should be understood to include "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

The embodiments of the present disclosure may involve data of the user, obtaining and/or using the data, and the like. These aspects all follow the corresponding laws and regulations and related regulations. In the embodiments of the present disclosure, all data is collected, obtained, processed, handled, forwarded, used, etc., all of which are performed on the premise the knowledge and confirmation of the user. Accordingly, in a case where implementing the embodiments of the present disclosure, the types of the data or information that may be involved, the usage scope, the usage scenario, and the like should be notified to the user and obtain the authorization of the user in an appropriate manner according to the relevant laws and regulations. The specific notification and/or authorization manner may vary according to actual situations and application scenarios, and the scope of the present disclosure is not limited in this respect.

According to the solutions in the present specification and the embodiments, for example, personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by the basic function, and does not affect the basic function of the user.

As introduced above, live streaming has become an important form of Internet interaction. People may, for example, initiate a live stream and become a streamer of the live stream. Alternatively, people may also join a further live stream to obtain corresponding live streaming content.

Some live streams allow users to interact through virtual interactive resources (e.g., virtual gifts). However, the virtual interactive resources available in a live stream are typically managed by the live streaming platform, making it difficult to obtain differentiated virtual interactive resources across different live streams.

In view of this, embodiments of the present disclosure provide a solution for determining an interactive resource. According to the scheme, a management interface for managing an interactive resource for the live stream can be presented to a first user of a live stream. Further at least one resource editing operation of the first user in the management interface is obtained, where the at least one resource editing operation indicates at least: adding at least one interactive resource, removing at least one interactive resource, or adjusting a presentation order of an interactive resource. Correspondingly, a set of target interactive resources for the live stream can be determined based on the at least one resource editing operation, that is, a set of interactive resources that can be used by the user in the live stream.

Based on the above manner, the embodiments of the present disclosure can support a specific user (for example, a streamer) of a live stream to manage available interactive resources in a live stream.

Various example implementations of this scheme are described in detail below in conjunction with the accompanying drawings.

### Example Environment

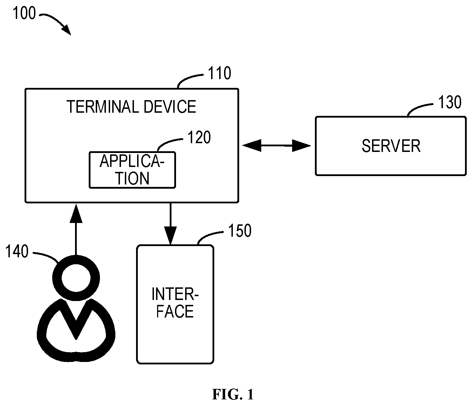

FIG. 1 illustrates a schematic diagram of an example environment 100 in which embodiments of the present disclosure can be implemented. As shown in FIG. 1, the example environment 100 may include a terminal device 110.

In this example environment 100, the terminal device 110 may run an application 120 for providing, viewing media content. The application 120 may be any suitable type of application for providing, viewing media content, examples of which may include, but are not limited to: online video applications, live streaming applications. The user 140 may interact with the application 120 via the terminal device 110 and/or its attachment device. The user 140 may, for example, be a user providing live streaming content (also referred to as a streamer) or a user viewing the live stream (also referred to as a viewer).

In the environment 100 of FIG. 1, if the application 120 is active, the terminal device 110 may present a live streaming interface 150 through the application 120.

In some embodiments, the terminal device 110 communicates with a server 130 to enable provisioning of services to the application 120. the terminal device 110 may be any type of mobile terminal, fixed terminal, or portable terminal, including but not limited to a mobile phone, a desktop computer, a laptop computer, a notebook computer, a netbook computer, a tablet computer, a media computer, a multimedia tablet computer, a palmtop computer, a portable gaming terminal, a VR/AR device, a Personal Communication System (PCS) device, a personal navigation device, a Personal Digital Assistant (PDA), an audio/video player, a digital camera/camcorder, a positioning device, a television receiver, a radio broadcast receiver, an e-book reader, a gaming device, or any combination of the foregoing, including accessories and peripherals thereof or any combination thereof. In some embodiments, the terminal device 110 can also support any type of interface for a user (such as a "wearable" circuit, etc. ).

The server 130 may be an independent physical server, or a server cluster or distributed system constituted by a plurality of physical servers, or a cloud server providing basic cloud-computing services such as cloud services, cloud databases, cloud computing, cloud functions, cloud storage, network services, cloud communications, middleware services, domain-name services, security services, content-delivery networks, big-data platforms, and AI platforms. The server 130 may include, for example, a computing system/server, such as a mainframe, an edge computing node, a computing device in a cloud environment, or the like. The server 130 may provide a background service for the application 120 that supports the virtual scene in the terminal device 110.

A communication connection may be established between the server 130 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (Wi-Fi) connection, and the like, and the embodiments of the present disclosure are not limited in this aspect. In embodiments of the present disclosure, the server 130 and the terminal device 110 may implement signaling interaction by using a communication connection between the server 130 and the terminal device 110.

It should be understood that the structures and functions of the various elements in the environment 100 are described for example purposes only and do not imply any limitation to the scope of the present disclosure.

Some example embodiments of the present disclosure will be described below with continued reference to the accompanying drawings.

### Example Interface

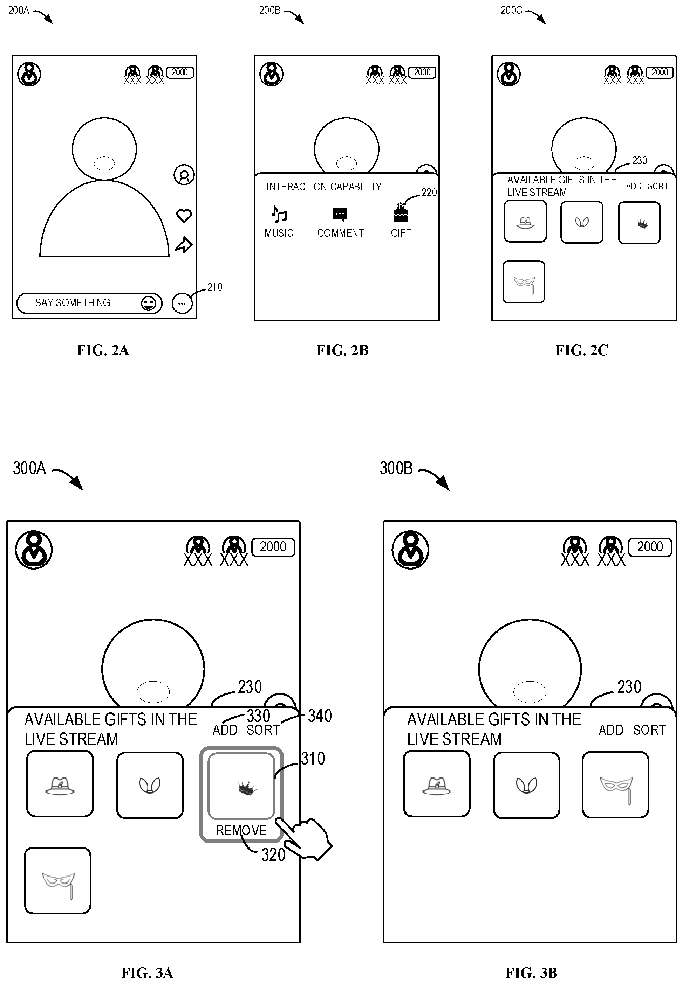

Some example embodiments of the present disclosure will be described below with continued reference to the accompanying drawings. FIG. 2A illustrates an example interface 200A, which may be provided, for example, by the terminal device 110 associated with a first user (e.g., a streamer of a live stream), according to some embodiments of the present disclosure.

As shown in FIG. 2A, the interface 200A may be, for example, a live streaming interface of a live stream. Correspondingly, during live stream of the live stream, the terminal device 110 may present the interface 200A to the first user.

For example, when receiving a trigger for an entry 210, the terminal device 110 may present an interface as shown in FIG. 2B. As shown in FIG. 2B, the terminal device 110 may, for example, provide one or more entries for managing interaction capabilities in a live stream.

Such one or more entries may be used, for example, to manage different interaction capabilities within a live stream. For example, the terminal device 110 may provide an entry 220 (also referred to as a first management entry) for managing an interactive resource for the live stream. Such interactive resources may include any suitable type of resource for interaction with a specific user of the live stream (for example, the streamer or a further viewer), examples of which include, but are not limited to, gifts, effects, red packets, speech bullet comments, and the like. For ease of description, the solutions of the present disclosure are described below with "gift" as an example of an interactive resource.

As shown in FIG. 2B, in a case that a selection of the entry 220 is received, the terminal device 110 may present an interface 200C shown in FIG. 2C. As shown in FIG. 2C, in the interface 200C, the terminal device 110 may display a management interface 230 for managing the interactive resource for the live stream.

A resource editing operation supported in the management interface 230 will be described below with reference to FIGS. 3A-3C. FIG. 3A illustrates an example interface 300A according to some embodiments of the present disclosure. As shown in FIG. 3A, the management interface 230 may, for example, display a set of interactive resources, which may correspond to currently available interactive resources in the live stream.

In some embodiments, the first user may, for example, remove the currently available interactive resource via the management interface 230. As shown in FIG. 3B, the terminal device 110 may, for example, receive a selection of the interactive resource 310 by the first user, and correspondingly present a removal option 320 corresponding to the interactive resource 310. Further, the terminal device 110 may receive the selection of the removal option 320 by the first user, so as to remove the interactive resource 310 from the available interactive resources of the live stream. Correspondingly, the terminal device 110 may present the interface 300B shown in FIG. 3B to indicate that the interactive resource 310 is deleted, so that it is no longer presented in the management interface 230.

When the interactive resource 310 is removed from the available interactive resource of the live stream, other users (e.g., viewers) in the live stream cannot initiate an interaction operation corresponding to the interactive resource 310. Taking the gift as an example, the viewer will not be able to view the interactive resource 310 in the gift panel, or the interactive resource 310 will be in a non-selectable state.

It should be understood that the above operations for indicating that the interactive resource 310 is removed from the available interactive resource of the live stream is merely an example, and the terminal device 110 may also support removing the interactive resource 310 through any other suitable type of operation.

Further, although in the example of FIG. 3B, the removed interactive resource 310 is not displayed. In some other examples, the removed interactive resource 310 may be continued to be displayed in the management interface 230, for example. For example, the removed interactive resource 310 may have a different display style than other interactive resources, or it may be presented in association with a label indicating the removal state.

In some embodiments, the first user may also add the available interactive resources via the management interface 230. As shown in FIG. 3A, the management interface 230 may, for example, present an addition control 330. Further, after receiving a selection of the addition control 330, the terminal device 110 may, for example, display a set of candidate interactive resources associated with the live stream.

In some examples, such set of candidate interactive resources may be, for example, one or more interactive resources currently set to an unavailable state in the live stream. Further, the terminal device 110 may, for example, receive a selection of one or more interactive resources of the first user for the set of candidate interactive resources, thereby changing their state from unavailable to available.

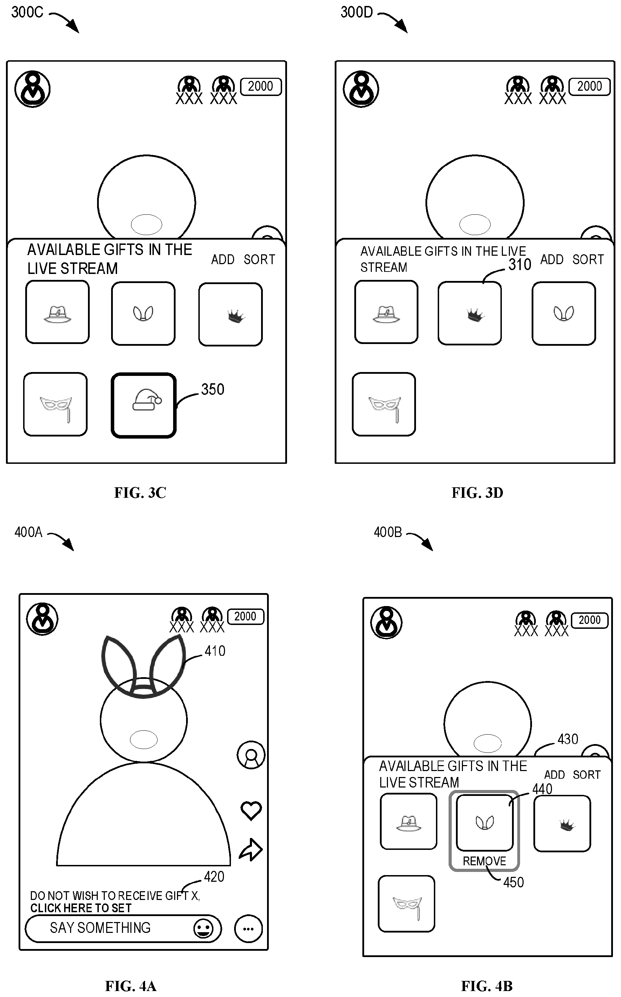

Taking FIG. 3C as an example, the first user may, for example, select and add the interactive resource 350 to the available interactive resource for the live stream. Accordingly, the added interactive resources 350 may be displayed in the management interface 230.

It should be understood that the above operations indicating that the interactive resource 350 is added from the available interactive resource of the live stream is merely an example, and the terminal device 110 may also support removing the interactive resource 310 through other suitable types of operations.

For example, the terminal device 110 may, for example, present all candidate interactive resources associated with the live stream in the management interface 230, regardless of whether such interactive resources are available. Further, the terminal device 110 may, for example, receive a user's selection of a specific interactive resource so as to change its state from unavailable to available or from available to unavailable.

In yet a further embodiment, the first user may also use the management interface 230 to sort the available interactive resources in the live stream to adjust the presentation order of the interactive resources in the live streaming interface.

For example, taking FIG. 3A as an example, the management interface 330 may, for example, show an order of four currently available interactive resources. Further, the first user may, for example, drag the interactive resource 310 and change its order in the four interactive resources.

As a further example, the first user may also trigger a sorting mode of entering the interactive resource by clicking a sorting option 340. Under the sorting mode, the first user may adjust its presentation order, for example, by dragging the interactive resource. Taking FIG. 3D as an example, the first user may, for example, adjust the interactive resource 310 from "the third position" to "the second position" among the four available resources.

In some embodiments, as will be described below, the order of the interactive resources may also be embodied in an interface viewed by a second user of the live stream, such that the terminal device associated with the second user of the live stream presents, based on the adjusted order, a set of target interactive resources for the live stream.

In this way, the embodiments of the present disclosure can support the streamer of the live stream to configure the presentation order of the available interactive resources within the live stream, thereby improving the interactive experience in the live stream.

The foregoing describes accessing the management page 310 via the management entry 310 in the live streaming interface during live stream. It should be appreciated that such a management entry 310 may also be displayed in other suitable positions of the live streaming interface. For example, the terminal device 110 may directly provide the management entry 310 in the live streaming interface, or provide the management entry 310 through a different access path than described above. This disclosure is not intended to be limiting.

In some other embodiments, the terminal device 110 may further support, for example, the first user triggering display of the management interface based on prompt information associated with the interactive resource.

FIG. 4A illustrates an example interface 400A according to some embodiments of the present disclosure. The interface 400A may be provided, for example, by the terminal device 110 associated with a first user (e.g., a streamer of a live stream). As shown in FIG. 4A, the interface 400A may be, for example, a live streaming interface of a live stream. Correspondingly, during live stream of the live stream, the terminal device 110 may present the interface 400A to the first user.

In some embodiments, during live stream of the live stream, the terminal device 110 may display prompt information 420 corresponding to an interactive resource (for example, "Gift X"). Such prompt information 420 may, for example, correspond to setting a second interactive resource as an unavailable interactive resource for the live stream, for example, "Do not wish to receive Gift X".

In some embodiments, such prompt information 420 may be displayed, for example, based on at least one interactive event occurring within the live stream and associated with the interactive resource. For example, when a large number of "Gifts X" are received within a short time, the corresponding dynamic effect 410 may affect the live streaming image, and then the terminal device 110 may display the prompt information corresponding to the "Gift X".

Further, in a case that a selection of the prompt information 420 is received, the terminal device 110 may display an interface 400B shown in FIG. 4B. In the interface 400B, the terminal device 110 may, for example, display a management interface 430.

In some embodiments, when the management interface 430 is triggered to be displayed based on the prompt information 420, an interactive resource 440 may be marked, for example, in a target style, to indicate a selection state of the interactive resource 440. Such target style may include, for example, a border, background color, or transparency that differs from that of the other interactive resources.

Further, the terminal device 110 may further display a removal option 450 corresponding to the interactive resource 440, to remove the interactive resource from the available interactive resource.

It should be understood that the editing operation in the management interface 430 may refer to the content discussed in FIG. 3A to FIG. 3D, and details are not described herein again.

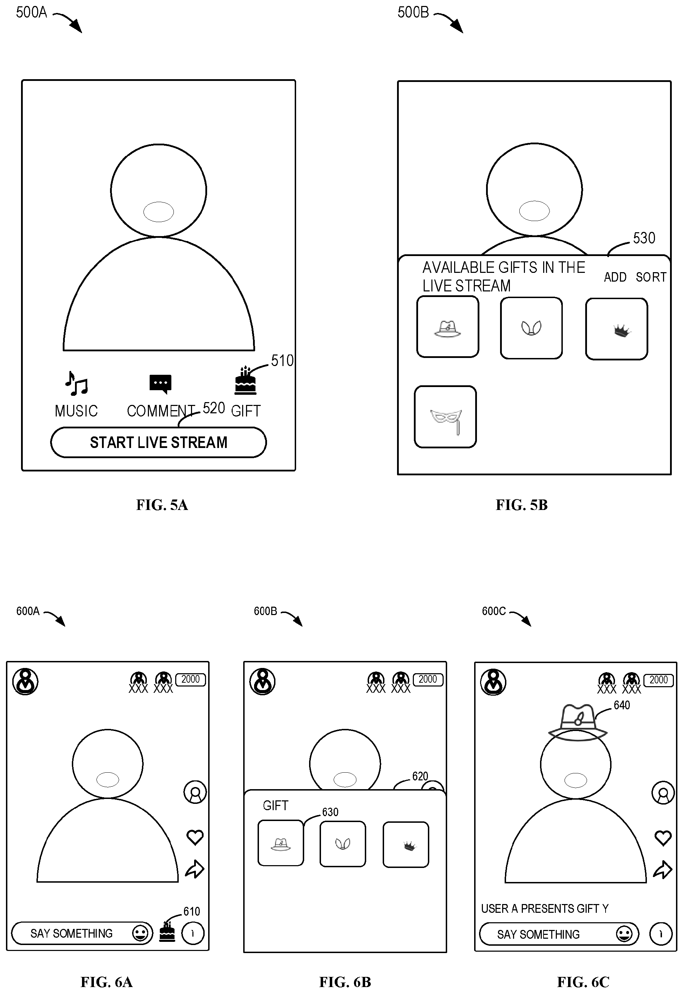

In still a further embodiment, the terminal device 110 may further support configuring the interactive resources available in the live stream before the live stream starts live stream. For example, FIG. 5A illustrates an example interface 500A according to some embodiments of the present disclosure. An interface 500A may be provided, for example, by the terminal device 110 associated with a first user (e.g., a streamer of a live stream). As shown in FIG. 5A, the interface 500A may be, for example, a live streaming configuration interface of a live stream. Correspondingly, before the live stream starts live stream, the terminal device 110 may present the interface 500A to the first user.

As shown in FIG. 5A, the interface 500A may include, for example, an entry 510 (also referred to as a second management entry). Upon receiving a selection for the entry 510, the terminal device 110 may, for example, present an interface 500B as shown in FIG. 5B. In the interface 500B, the terminal device 110 may display a management interface 530 for managing available interactive resources in the live stream.

It should be appreciated that such management entry 510 may also be displayed in other suitable positions of the live streaming interface. For example, the terminal device 110 may directly provide the management entry 510 in the live streaming interface, or provide the management entry 510 through a different access path than described above. This disclosure is not intended to be limiting.

Based on the interactive resource determination scheme introduced above, the embodiments of the present disclosure can support personalized customization of available interactive resources in the live stream, thereby improving the interactive experience in the live stream.

A live stream interaction solution according to embodiments of the present disclosure will be described below with reference to FIG. 6A to FIG. 6C. For example, FIG. 6A illustrates an example interface 600A according to some embodiments of the present disclosure. The interface 600A may be provided, for example, by the terminal device 110 associated with the second user (e.g., a viewer of a live stream). As shown in FIG. 6A, the interface 600A may be, for example, a live streaming interface of a live stream.

As shown in FIG. 6A, the second user may obtain the live streaming content of the live stream through the interface 600A, for example. In some embodiments, the interface 600A may include, for example, an interaction entry 610.

Upon receiving a selection of the interactive entry 610, the terminal device 110 may display an interface 600B as shown in FIG. 6B. As shown in FIG. 6B, the interface 600B may include an interactive interface 620 for displaying a set of target interactive resources 630 available to the live stream.

As introduced above, such set of target interactive resources 630 may be determined based on a resource editing operation of the first user (e.g., a streamer). For example, the types and/or presentation order of interactive resources selectable by the second user (e.g., viewer) in the interface 620 is determined through the configuration processes discussed earlier.

In some embodiments, an arrangement of the interactive resources in the interactive interface 620 may correspond to the arrangement discussed with reference to management page 230 and/or management page 430. Consequently, any resource editing operation performed in the management interface 230 and/or the management interface 430 can cause the number, type, presentation order, etc. of the interactive resources in the interaction interface 620 to change accordingly.

Taking FIG. 6B as an example, the live stream may include three available interactive resources. Further, the terminal device 110 may receive a selection for the interactive resource 630 to trigger an interaction event corresponding to the interactive resource 630 in the live stream.

Taking FIG. 6C as an example, the terminal device 110 may present, in the live streaming interface, an interactive effect 640 corresponding to the selected interactive resource 630.

In some embodiments, such interactive resources may also include interactive gifts, for example. Such interactive gift may be selected by a viewer user of the live stream, and can trigger a live streaming interface of the live stream to present the interactive effect 640 corresponding to the interactive gift.

In some embodiments, for the interactive gift, the display of the interactive effect 640 may also be related to the live streaming image of the live stream. Taking FIG. 6C as an example, the interactive gift may include, for example, a "top-hat gift." When a viewer presents the interactive gift, the live streaming image of the live stream will be applied with a corresponding effect 640, so as to add a virtual "top-hat" on the head of the streamer in the live streaming image. That is, such a presentation of a "top-hat" effect may be based on analysis of the live streaming image.

In view of such interactive gift, a corresponding effect is applied to the live streaming image, and the configuration of the interactive gift by a streamer in the live stream is supported in the manner discussed above. The embodiment of the present disclosure can effectively help a streamer to manage the live streaming image of the live stream, preventing undesired disturbances of the live streaming image and thereby enhancing the viewing experience within the live stream.

### Example Processes

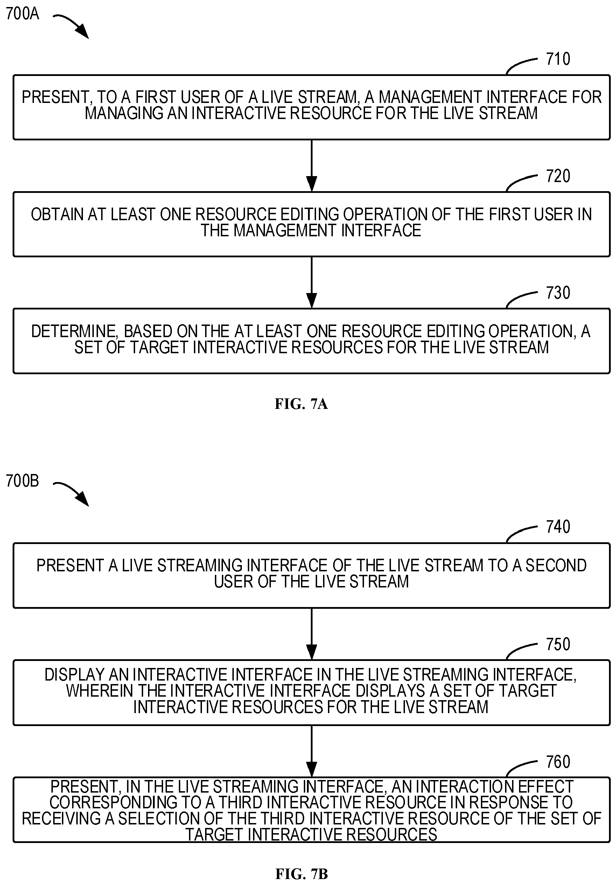

FIG. 7A illustrates a flowchart of an example process 700A for determining an interactive resource according to some embodiments of the present disclosure. The process 700A may be implemented at the terminal device 110 associated with the first user (e.g., a streamer) of a live stream. The process 700A is described below with reference to FIG. 1.

As shown in FIG. 7A, at block 710, the terminal device 110 presents, to the first user of the live stream, a management interface for managing an interactive resource for the live stream.

At block 720, the terminal device 110 obtains at least one resource editing operation of the first user in the management interface, where the at least one resource editing operation indicates at least: adding at least one interactive resource, removing at least one interactive resource, or adjusting a presentation order of an interactive resource.

At block 730, the terminal device 110 determines, based on the at least one resource editing operation, a set of target interactive resources for the live stream.

In some embodiments, obtaining at least one resource editing operation of the first user in the management interface includes: presenting to the first user a set of candidate interactive resources associated with the live stream; and receiving a first operation for a target candidate interactive resource of the set of candidate interactive resources, where the first operation indicates adding the target candidate interactive resource as a target interactive resource available for the live stream.

In some embodiments, presenting a set of candidate interactive resources associated with the live stream to the first user includes: providing, in response to a selection of an addition control in the management interface, the set of candidate interactive resources associated with the live stream to the first user.

In some embodiments, obtaining at least one resource editing operation of the first user in the management interface includes: presenting a first set of interactive resources in the management interface; and receiving a second operation for a first interactive resource of the first set of interactive resources, where the second operation indicates removing the first interactive resource from available interactive resources of the live stream.

In some embodiments, obtaining at least one resource editing operation of the first user in the management interface includes: presenting a second set of interactive resources in the management interface; and receiving a third operation for adjusting an order of the second set of interactive resources in the management interface.

In some embodiments, determining a set of target interactive resources for the live stream based on the at least one resource editing operation includes: determining the set of target interactive resources based on the sorted second set of interactive resources, causing a terminal device associated with a second user of the live stream to present, in accordance with the adjusted order, the set of target interactive resources for the live stream.

In some embodiments, presenting, to the first user of the live stream, the management interface for managing an interactive resource for the live stream includes: displaying, during a live streaming of the live stream, a first management entry in a live streaming interface of the live stream; and presenting, in response to receiving a selection for the first management entry, the management interface for managing the interactive resource for the live stream to the first user of the live stream.

In some embodiments, presenting, to the first user of the live stream, the management interface for managing an interactive resource for the live stream includes: displaying, during a live streaming of the live stream, prompt information associated with a second interactive resource in a live streaming interface of the live stream; and presenting, in response to receiving a selection for the prompt information, the management interface for managing the interactive resource for the live stream to the first user of the live stream.

In some embodiments, the prompt information corresponds to setting the second interactive resource as an unavailable interactive resource for the live stream.

In some embodiments, the second interactive resource is marked with a target style in the management interface to indicate a selected state of the second interactive resource.

In some embodiments, displaying the prompt information associated with the second interactive resource in the live streaming program of the live stream includes: displaying, in the live streaming interface of the live stream, the prompt information associated with the second interactive resource based on at least one interactive event associated with the second interactive resource occurring in the live stream.

In some embodiments, presenting, to the first user of the live stream, the management interface for managing an interactive resource for the live stream includes: displaying, before the live stream starts a live streaming, a second management entry in a live streaming configuration interface of the live stream; and providing, in response to receiving a selection for the second management entry, the management interface for managing the interactive resource for the live stream to the first user of the live stream.

In some embodiments, the interactive resource includes an interactive gift for causing the live stream to display a corresponding interactive effect, where the display of the interactive effect is related to a live streaming image of the live stream.

FIG. 7B illustrates a flowchart of an example process 700B for live stream interaction according to some embodiments of the present disclosure. The process 700B may be implemented at the terminal device 110 associated with the second user (e.g., a viewer) of a live stream. The process 700A is described below with reference to FIG. 1.

As shown in FIG. 7B, at block 740, the terminal device 110 presents a live streaming interface of the live stream to a second user of the live stream.

At block 750, the terminal device 110 displays an interactive interface in the live streaming interface, where the interactive interface displays a set of target interactive resources for the live stream. The display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource.

At block 760, the terminal device 110 presents, in the live streaming interface, an interaction effect corresponding to a third interactive resource in response to receiving a selection of the third interactive resource of the set of target interactive resources.

In some embodiments, the interactive resource includes an interactive gift for causing the live stream to display a corresponding interactive effect, where the display of the interactive effect is related to a live streaming image of the live stream.

### Example Apparatus and Device

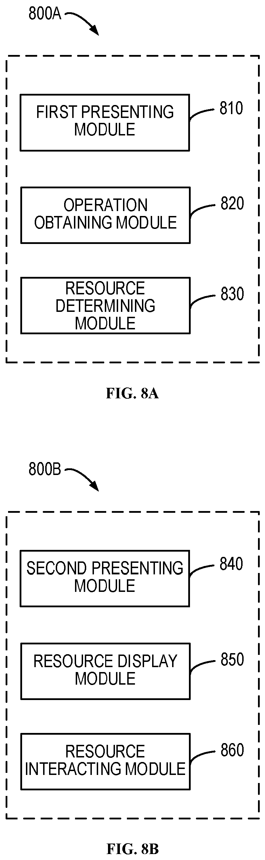

Embodiments of the present disclosure also provide a corresponding apparatus for implementing the above method or process. FIG. 8A illustrates a schematic structural block diagram of an apparatus 800A for determining an interactive resource according to some embodiments of the present disclosure. The apparatus 800A may be implemented or included in the terminal device 110. The various modules/components in the apparatus 800A may be implemented by hardware, software, firmware, or any combination thereof.

As shown in FIG. 8A, the apparatus 800A includes a first presenting module 810 configured to present, to a first user of a live stream, a management interface for managing an interactive resource for the live stream; an operation obtaining module 820 configured to obtain at least one resource editing operation of the first user in the management interface, where the at least one resource editing operation indicates at least: adding at least one interactive resource, removing at least one interactive resource, or adjusting a presentation order of an interactive resource; and a resource determining module 830 configured to determine, based on the at least one resource editing operation, a set of target interactive resources for the live stream.

In some embodiments, the operation obtaining module 820 is further configured to: present to the first user a set of candidate interactive resources associated with the live stream; and receive a first operation for a target candidate interactive resource of the set of candidate interactive resources, where the first operation indicates adding the target candidate interactive resource as a target interactive resource available for the live stream.

In some embodiments, the operation obtaining module 820 is further configured to provide, in response to a selection of an addition control in the management interface, the set of candidate interactive resources associated with the live stream to the first user.

In some embodiments, the operation obtaining module 820 is further configured to: present a first set of interactive resources in the management interface; and receive a second operation for a first interactive resource of the first set of interactive resources, where the second operation indicates removing the first interactive resource from available interactive resources of the live stream.

In some embodiments, the operation obtaining module 820 is further configured to: present a second set of interactive resources in the management interface; and receive a third operation for adjusting an order of the second set of interactive resources in the management interface.

In some embodiments, the resource determining module 830 is further configured to: determine the set of target interactive resources based on the sorted second set of interactive resources, causing a terminal device associated with a second user of the live stream to present, in accordance with the adjusted order, the set of target interactive resources for the live stream.

In some embodiments, the first presenting module 810 is further configured to: display, during a live streaming of the live stream, a first management entry in a live streaming interface of the live stream; and present, in response to receiving a selection for the first management entry, the management interface for managing the interactive resource for the live stream to the first user of the live stream.

In some embodiments, the first presenting module 810 is further configured to: display, during a live streaming of the live stream, prompt information associated with a second interactive resource in a live streaming interface of the live stream; and present, in response to receiving a selection for the prompt information, the management interface for managing the interactive resource for the live stream to the first user of the live stream.

In some embodiments, the prompt information corresponds to setting the second interactive resource as an unavailable interactive resource for the live stream.

In some embodiments, the second interactive resource is marked with a target style in the management interface to indicate a selected state of the second interactive resource.

In some embodiments, the first presenting module 810 is further configured to: display, in the live streaming interface of the live stream, the prompt information associated with the second interactive resource based on at least one interactive event associated with the second interactive resource occurring in the live stream.

In some embodiments, the first presenting module 810 is further configured to: display, before the live stream starts a live streaming, a second management entry in a live streaming configuration interface of the live stream; and provide, in response to receiving a selection for the second management entry, the management interface for managing the interactive resource for the live stream to the first user of the live stream.

In some embodiments, the interactive resource includes an interactive gift for causing the live stream to display a corresponding interactive effect, where the display of the interactive effect is related to a live streaming image of the live stream.

FIG. 8B illustrates a schematic structural block diagram of an apparatus 800B for live stream interaction according to some embodiments of the present disclosure. The apparatus 800B may be implemented or included in the terminal device 110. The various modules/components in the apparatus 800B may be implemented by hardware, software, firmware, or any combination thereof.

As shown in FIG. 8B, the apparatus 800B includes a second presenting module 840 configured to present a live streaming interface of the live stream to a second user of the live stream; a resource display module 850 configured to display an interactive interface in the live streaming interface, where the interactive interface displays a set of target interactive resources for the live stream; and a resource interacting module 860 configured to present, in the live streaming interface, an interaction effect corresponding to a third interactive resource in response to receiving a selection of the third interactive resource of the set of target interactive resources, where the display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource.

**In** some embodiments, the interactive resource includes an interactive gift for causing the live stream to display a corresponding interactive effect, where the display of the interactive effect is related to a live streaming image of the live stream.

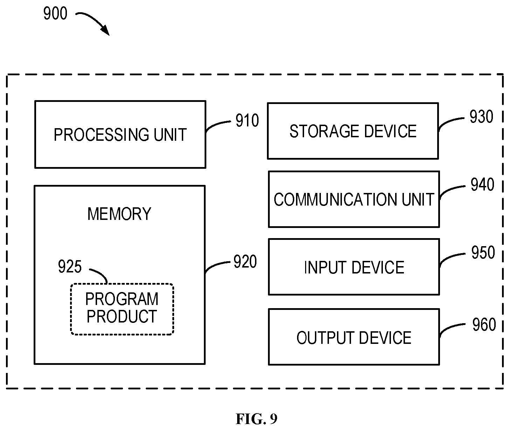

FIG. 9 illustrates a block diagram of an electronic device 900 in which one or more embodiments of the present disclosure may be implemented. It should be understood that the electronic device 900 illustrated in FIG. 9 is merely example and should not constitute any limitation on the functionality and scope of the embodiments described herein. The electronic device 900 shown in FIG. 9 may be configured to implement the electronic device 110 in FIG. 1.

As shown in FIG. 9, the electronic device 900 is in the form of a general-purpose electronic device. Components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor and capable of performing various processes according to programs stored in the memory 920. In multiprocessor systems, multiple processing units execute computer-executable instructions in parallel to improve parallel processing capabilities of the electronic device 900.

The electronic device 900 typically includes a plurality of computer storage media. Such media may be any available media accessible to the electronic device 900, including, but not limited to, volatile and non-volatile media, removable and non-removable media. The memory 920 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 930 may be a removable or non-removable medium and may include a machine-readable medium, such as a flash drive, magnetic disk, or any other medium, which may be capable of storing information and/or data and may be accessed within the electronic device 900.

The electronic device 900 may further include additional removable/non-removable, volatile/non-volatile storage media. Although not shown in FIG. 9, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the present disclosure.

The communication unit 940 is configured to communicate with a further electronic device through a communication medium. Additionally, the functionality of components of the electronic device 900 may be implemented in a single computing cluster or multiple computing machines capable of communicating over a communication connection. Thus, the electronic device 900 may operate in a networked environment using logical connections with one or more other servers, network personal computers (PCs), or a further network node.

The input device 950 may be one or more input devices such as a mouse, a keyboard, a trackball, or the like. The output device 960 may be one or more output devices, such as a display, a speaker, a printer, or the like. The electronic device 900 may also communicate with one or more external devices (not shown) through the communication unit 940 as needed, external devices such as storage devices, display devices, etc. , communicate with one or more devices that enable a user to interact with the electronic device 900, or communicate with any device (e.g., a network card, a modem, etc. ) that enables the electronic device 900 to communicate with one or more other electronic devices. Such communication may be performed via an input/output (I/O) interface (not shown).

According to example implementations of the present disclosure, a computer-readable storage medium having computer-executable instructions stored thereon is provided, where the computer program is executable by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are example, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of determining an interactive resource, comprising:
presenting, to a first user of a live stream, a management interface for managing an interactive resource for the live stream;
obtaining at least one resource editing operation of the first user in the management interface, wherein the at least one resource editing operation indicates at least: adding at least one interactive resource, removing at least one interactive resource, or adjusting a presentation order of an interactive resource; and
determining, based on the at least one resource editing operation, a set of target interactive resources for the live stream.

2. The method of claim 1, wherein obtaining at least one resource editing operation of the first user in the management interface comprises:
presenting to the first user a set of candidate interactive resources associated with the live stream; and
receiving a first operation for a target candidate interactive resource of the set of candidate interactive resources, wherein the first operation indicates adding the target candidate interactive resource as a target interactive resource available for the live stream.

3. The method of claim 2, wherein presenting a set of candidate interactive resources associated with the live stream to the first user comprises:
providing, in response to a selection of an addition control in the management interface, the set of candidate interactive resources associated with the live stream to the first user.

4. The method of claim 1, wherein obtaining at least one resource editing operation of the first user in the management interface comprises:
presenting a first set of interactive resources in the management interface; and
receiving a second operation for a first interactive resource of the first set of interactive resources, wherein the second operation indicates removing the first interactive resource from available interactive resources of the live stream.

5. The method of claim 1, wherein obtaining at least one resource editing operation of the first user in the management interface comprises:
presenting a second set of interactive resources in the management interface; and
receiving a third operation for adjusting an order of the second set of interactive resources in the management interface.

6. The method of claim 5, wherein determining a set of target interactive resources for the live stream based on the at least one resource editing operation comprises:
determining the set of target interactive resources based on the sorted second set of interactive resources, causing a terminal device associated with a second user of the live stream to present, in accordance with the adjusted order, the set of target interactive resources for the live stream.

7. The method of claim 1, wherein presenting, to the first user of the live stream, the management interface for managing an interactive resource for the live stream comprises:
displaying, during a live streaming of the live stream, a first management entry in a live streaming interface of the live stream; and
presenting, in response to receiving a selection for the first management entry, the management interface for managing the interactive resource for the live stream to the first user of the live stream.

8. The method of claim 1, wherein presenting, to the first user of the live stream, the management interface for managing an interactive resource for the live stream comprises:
displaying, during a live streaming of the live stream, prompt information associated with a second interactive resource in a live streaming interface of the live stream; and
presenting, in response to receiving a selection for the prompt information, the management interface for managing the interactive resource for the live stream to the first user of the live stream.

9. The method of claim 8, wherein the prompt information corresponds to setting the second interactive resource as an unavailable interactive resource for the live stream.

10. The method of claim 8, wherein the second interactive resource is marked with a target style in the management interface to indicate a selected state of the second interactive resource.

11. The method of claim 8, wherein displaying the prompt information associated with the second interactive resource in the live streaming program of the live stream comprises:
displaying, in the live streaming interface of the live stream, the prompt information associated with the second interactive resource based on at least one interactive event associated with the second interactive resource occurring in the live stream.

12. The method of claim 1, wherein presenting, to the first user of the live stream, the management interface for managing an interactive resource for the live stream comprises:
displaying, before the live stream starts a live streaming, a second management entry in a live streaming configuration interface of the live stream; and
providing, in response to receiving a selection for the second management entry, the management interface for managing the interactive resource for the live stream to the first user of the live stream.

13. The method of claim 1, wherein the interactive resource comprises an interactive gift for causing the live stream to display a corresponding interactive effect, wherein the display of the interactive effect is related to a live streaming image of the live stream.

14. A method of live stream interaction, comprising:
presenting a live streaming interface of the live stream to a second user of the live stream;
displaying an interactive interface in the live streaming interface, wherein the interactive interface displays a set of target interactive resources for the live stream; and
presenting, in the live streaming interface, an interaction effect corresponding to a third interactive resource in response to receiving a selection of the third interactive resource of the set of target interactive resources,
wherein the display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource.

15. The method of claim 14, wherein the interactive resource comprises an interactive gift for causing the live stream to display a corresponding interactive effect, wherein the display of the interactive effect is related to a live streaming image of the live stream.

16. An apparatus for determining an interactive resource, comprising:
a first presenting module configured to present, to a first user of a live stream, a management interface for managing an interactive resource for the live stream;
an operation obtaining module configured to obtain at least one resource editing operation of the first user in the management interface, wherein the at least one resource editing operation indicates at least: adding at least one interactive resource, removing at least one interactive resource, or adjusting a presentation order of an interactive resource; and
a resource determining module configured to determine, based on the at least one resource editing operation, a set of target interactive resources for the live stream.

17. An apparatus for live stream interaction, comprising:
a second presenting module configured to present a live streaming interface of the live stream to a second user of the live stream;
a resource display module configured to display an interactive interface in the live streaming interface, wherein the interactive interface displays a set of target interactive resources for the live stream; and
a resource interacting module configured to present, in the live streaming interface, an interaction effect corresponding to a third interactive resource in response to receiving a selection of the third interactive resource of the set of target interactive resources,
wherein the display of the set of target interactive resources in the interaction is determined based on at least one resource editing operation of a first user of the live stream, the at least one resource editing operation indicates at least: adding at least one interactive resource, removing at least one interactive resource, or adjusting a presentation order of an interactive resource.

18. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 13 or 14 to 15.

19. A computer-readable storage medium having a computer program stored thereon, the computer program being executable by a processor to implement the method of any of claims 1 to 13 or 14 to 15.
